# EUROPEAN PATENT APPLICATION

(11) **EP 4 733 965 A1**
(43) Date of publication of application: **29.04.2026**
(21) Application number: 25209505.4
(22) Date of filing: 17.10.2025
(51) Int. Cl.: G06F 21/31, G06F 1/3203, G06F 21/60

(54) **INFORMATION PROCESSING APPARATUS AND METHOD OF CONTROLLING INFORMATION PROCESSING APPARATUS**

(30) Priority: 25.10.2024 JP 2024188383
(71) Applicant: Sharp Kabushiki Kaisha, Sakai City, Osaka 590-8522 (JP)
(72) Inventor: TOKUNAGA, Shingo, Sakai City, Osaka, 590-8522 (JP); IMAI, Hidemitsu, Sakai City, Osaka, 590-8522 (JP)
(74) Representative: Müller Hoffmann & Partner

(57) **Abstract**

An information processing apparatus of the disclosure includes a controller and a communicator that communicates, via a network, with a server that generates a token, wherein the controller receives the token from the server using the communicator, executes token reacquisition processing of transmitting a token reacquisition request for requesting reacquisition of the token to the server using the communicator and receiving the token as a response, and performs control to avoid interruption of processing including the token reacquisition processing during execution of the token reacquisition processing.

## Description

### Field of the Invention

The disclosure relates to an information processing apparatus and the like. The application is based on Japanese Patent Application No. 2024-188383 filed in Japan on Oct. 25, 2024, the contents of which are incorporated herein by reference.

### Background Art

A service used through authorization by OAuth may involve a client terminal requesting an authorization server for token reacquisition processing of reacquiring an access token using a refresh token authorized in advance.

### Citation List

### Patent Literature

PTL 1: JP 2023-140742 A

### Summary

### Technical Problem

In this type of service, the token reacquisition processing may fail and the token of the client terminal may become invalid. In this case, the user needs to perform an operation including input of an account and a password on the client terminal in order to request the authorization server for issuing of the token again.

An object of the disclosure is to prevent the operability of the user from being compromised due to the failure of the token reacquisition processing.

### Solution to Problem

The disclosure provides an information processing apparatus including one or more controllers and a communicator that communicates, via a network, with a server that generates a token, wherein the one or more controllers receive the token from the server using the communicator, execute token reacquisition processing of transmitting a token reacquisition request for requesting reacquisition of the token to the server using the communicator and receiving the token as a response, and perform control to avoid interruption of processing including the token reacquisition processing during execution of the token reacquisition processing.

The disclosure also provides a method of controlling an information processing apparatus including a communicator that communicates, via a network, with a server that generates a token, the method including receiving the token from the server using the communicator, executing token reacquisition processing of transmitting a token reacquisition request for requesting reacquisition of the token to the server using the communicator and receiving the token as a response, and performing control to avoid interruption of processing including the token reacquisition processing during a period from when the token reacquisition request is transmitted to the server to when the token is received from the server.

### Advantageous Effects of Disclosure

With the disclosure, the operability of the user can be prevented from being compromised due to the failure of the token reacquisition processing.

### Brief Description of the Drawings

FIG. 1 is a schematic diagram of an authentication system according to a first embodiment of the disclosure.
FIG. 2 is a block diagram of an MFP according to the first embodiment of the disclosure.
FIG. 3 is a block diagram of a controller of the MFP according to the first embodiment of the disclosure.
FIG. 4 is a block diagram of a storage of the MFP according to the first embodiment of the disclosure.
FIG. 5 is a schematic diagram for explaining an operation example of a general MFP.
FIG. 6 is a schematic diagram for explaining an operation example of the general MFP.
FIG. 7 is a schematic diagram for explaining an operation example of the general MFP.
FIG. 8 is a schematic diagram for explaining an operation example of the general MFP.
FIG. 9 is a schematic diagram for explaining an operation example of the general MFP.
FIG. 10 is a flowchart for explaining an operation of the MFP according to the first embodiment of the disclosure.
FIG. 11 is a flowchart for explaining an operation of the MFP according to the first embodiment of the disclosure.
FIG. 12 is a flowchart for explaining an operation of an MFP according to a second embodiment of the disclosure.
FIG. 13 is a flowchart for explaining an operation of an MFP according to a third embodiment of the disclosure.
FIG. 14 is a block diagram of a controller of an MFP according to a fourth embodiment of the disclosure.
FIG. 15 is a block diagram of a storage of the MFP according to the fourth embodiment of the disclosure.
FIG. 16 is a flowchart for explaining an operation of the MFP according to the fourth embodiment of the disclosure.

### Description of Embodiments

When various services involving authorization by OAuth are used, if an authorization server is requested to update (reacquire) a token using an authorized refresh token, token update (reacquisition) processing may fail and the token may fail to be updated (reacquired). In addition, the refresh token transmitted to the authorization server together with the token update (reacquisition) request may be invalidated on the authorization server side. Since the invalidated refresh token cannot be used for the token update (reacquisition) processing, the user needs to manually perform re-authentication for various services for which the authorization by OAuth is performed and reacquire a new token. In the disclosure, in order to avoid the manual re-authentication in the token update (reacquisition) processing, the execution of a predetermined operation such as transition to an energy saving mode is suppressed during the execution of the token update (re-acquisition) processing.

When a client device uses various services through authorization by OAuth, the client device may execute processing for requesting the authorization server to update (reacquire) an access token using an authorized refresh token, that is, token update (reacquisition) processing. A certain event may occur in the client device at the timing of executing the token update (reacquisition) processing. Examples of the event include termination of the application due to the transition to an energy saving mode, termination of the application due to the operation on a HOME button (also referred to as a home button) by a user (for example, selection of the HOME button), and the like. In such a case, the token update (reacquisition) processing may fail, and the client device may fail to acquire the updated token.

When the token update (reacquisition) processing fails, the authorization server may invalidate the refresh token currently held by the client device. In this case, the access token cannot be updated using the refresh token currently held by the client device. Therefore, when the refresh token is invalidated due to a failure of the token update (reacquisition) processing, the user needs to manually perform authentication with the authorization server and acquire a new token again. In general, in order to acquire a new token, the user needs to perform an operation of inputting an account and a password and an operation for two-factor authentication. As a result, the operability of the user is hugely compromised.

In order to avoid such manual authentication processing, in the disclosure, while token update (reacquisition) processing is executed on the authorization server, the occurrence of an event leading to a failure of the token update (reacquisition) processing, such as transition processing to the energy saving mode and termination of an application due to the home button operation is suppressed.

### 1. First Embodiment

### 1.1 System Configuration

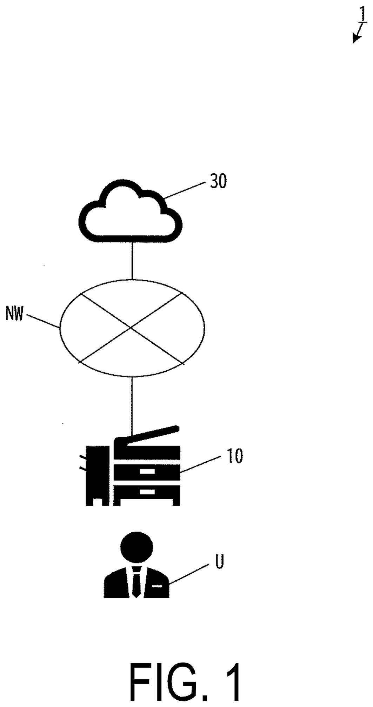

FIG. 1 is a schematic diagram of an information processing system 1 according to a first embodiment of the disclosure. The information processing system 1 includes a multi-function printer/peripheral (MFP) 10 and an authorization server 30. The MFP 10 and the authorization server 30 are communicably connected via a network NW such as the Internet, a wide area network (WAN), or a local area network (LAN). A user U operates the MFP 10. Although one MFP 10 and one authorization server 30 are illustrated in FIG. 1, the number of each of such devices may be one or more than one.

The MFP 10 is an information processing apparatus also called a multi-function printer (image forming apparatus), and typically has a copy function, an image scanner function, a facsimile function, and a printer function. The MFP 10 may further have other functions, and for example, may have an email sending and receiving function, a file server function, and the like.

The authorization server 30 is a server that performs authorization for using various services. The authorization server 30 preferably performs authorization by OAuth, for example. The authorization server 30 newly issues an access token and a refresh token. Here, the new issuance of the tokens means that the access token and the refresh token are generated based on the account and the password input by the user. A case where a certain user inputs an account and a password and requests issuance of a token is referred to as new issuance, even if the authorization server 30 generated an access token and a refresh token for the same user in the past. The authorization server 30 updates the access token and the refresh token based on the refresh token. The authorization server 30 also executes token authentication for authenticating the user based on the access token.

### 1.2 Configuration of MFP 10

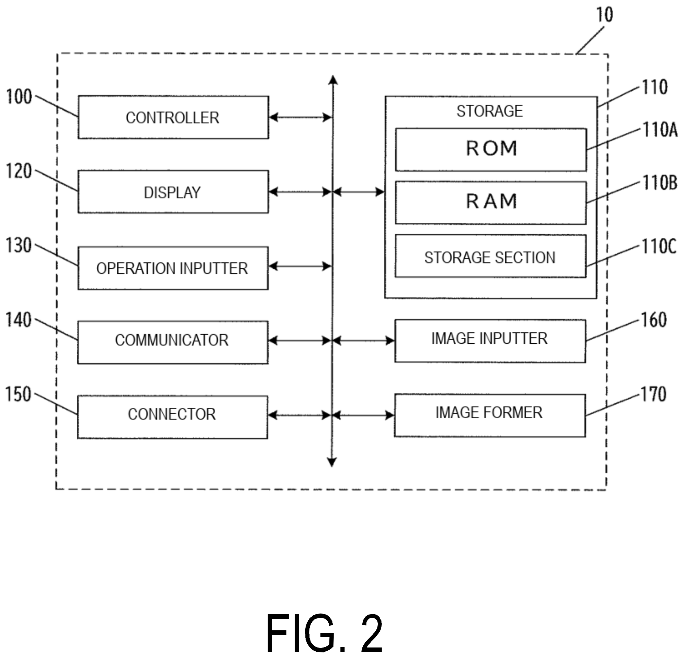

FIG. 2 is a block diagram of the MFP 10. The MFP 10 includes a controller 100, a storage 110, a display 120, an operation inputter 130, a communicator 140, a connector 150, an image inputter 160, and an image former 170.

The controller 100 controls the entire MFP 10. The controller 100 includes one or more control devices or control circuits, and includes, for example, a central processing unit (CPU), which is a processor that executes various arithmetic processes, a system on a chip (SoC), and the like. In addition, the controller 100 can realize each function by reading programs stored in the storage 110 and executing processing.

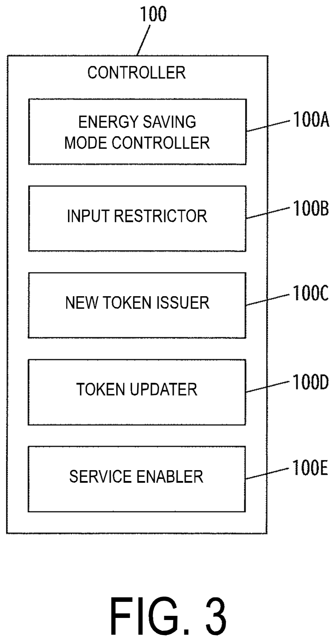

FIG. 3 is a block diagram of the controller 100. The controller 100 includes an energy saving mode controller 100A, an input restrictor 100B, a new token issuer 100C, a token updater (reacquirer) 100D, and a service enabler 100E.

The energy saving mode controller 100A controls power supply to each part of the MFP 10 to change the operation mode of the MFP 10. The MFP 10 has a normal mode and an energy saving mode as the operation modes. Under the energy saving mode, the energy saving mode controller 100A limits or stops the power supply to the display 120, the communicator 140, the connector 150, the image inputter 160, the image former 170, and the like, thereby achieving suppressed (low) power supply as compared with the normal state. Under the normal mode, the energy saving mode controller 100A supplies power as in the normal state, to each part of the MFP 10 including part to which power supply is stopped under the energy saving mode. The condition for transition from the normal mode to the energy saving mode and the condition for transition from the energy saving mode to the normal mode are stored in advance in the storage 110, as setting information of the MFP 10, and the energy saving mode controller 100A operates according to the setting information in principle, but restricts the transition to the energy saving mode as described below when processing including token update (reacquisition) processing is executed.

The input restrictor 100B restricts inputs via the operation inputter 130 under a predetermined condition. For example, the input restrictor 100B restricts operations on an operation target displayed on the display 120. A possible example of a method of the restriction includes hiding a button that is an operation target. Another possible method includes displaying the operation target in a gray-out manner and ignoring an operation when the operation target in such a state is operated.

The new token issuer 100C communicates with the authorization server 30 using the communicator 140, requests the authorization server 30 for new issuance of an access token and a refresh token, acquires the issued access token and refresh token, and stores the tokens in a token storage 111 of the storage 110 described below.

The token updater (reacquirer) 100D communicates with the authorization server 30 using the communicator 140, and requests the authorization server 30 to update the access token and the refresh token using the refresh token stored in the token storage 111. The token updater (reacquirer) 100D acquires the updated access token and refresh token from the authorization server 30 and stores the tokens in the token storage 111 of the storage 110 described below.

The service enabler 100E communicates with the authorization server 30 using the communicator 140, undergoes token authentication using the access token, and uses a network service provided by the authorization server 30 or another server.

The storage 110 stores various programs and various types of data necessary for the operation of the MFP 10. The storage 110 includes one or more recording devices capable of temporary storage, such as a dynamic random access memory (DRAM) or one or more non-temporary recording devices, such as a solid state drive (SSD) made of semiconductor memory or a hard disk drive (HDD) made of a magnetic disk, for example. Further, for convenience of explanation, the storage 110 is configured as one unit, but the storage 110 may be configured as separate devices for each purpose, such as an area used for execution of programs (main storage area), an area that stores programs or data (auxiliary storage area), and an area used for caching.

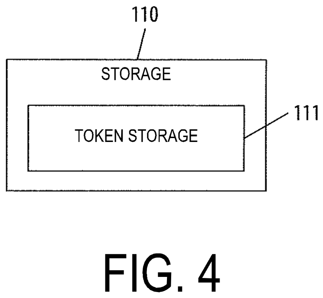

FIG. 4 is a block diagram of the storage 110. The storage 110 includes the token storage 111. The token storage 111 stores an access token and a refresh token newly issued or updated by the authorization server 30.

The display 120 displays images and text. For example, the display 120 is configured of a liquid crystal display (LCD), an organic electro-luminescence (EL) panel, or the like. The display 120 may be a single display device, or may further include a display device connected to the outside.

The operation inputter 130 receives an operation input from a user. For example, the operation inputter 130 is composed of hardware keys and/or software keys. Further, the operation inputter 130 includes task keys for instructing to execute tasks such as fax transmission and image reading, and operation keys such as a cancel key for instructing to cancel an operation, for example.

The operation inputter 130 and the display 120 may be integrally configured as a touch panel, or the operation inputter 130 and the display 120 may be configured as separate devices. In such a case, the operation inputter 130 detects the user's touch, tap, swipe operation, or the like with respect to an object displayed via the display 120, and acquires a coordinate position, pressure-sensitive information, or the like of touch panel information. As an input scheme for a touch panel, for example, a general input scheme such as a resistive film scheme, an infrared scheme, an electromagnetic induction scheme, or a capacitive scheme can be employed.

The communicator 140 connects to a network. For example, the communicator 140 is configured of an interface that can be connected to a wired local area network (LAN), a wireless LAN, or a long term evolution (LTE) network. The communicator 140 is connected to a network for connection to another device or an external network. In addition, the communicator 140 may be an interface for short-distance wireless communication such as near field communication (NFC) or Bluetooth (trade name), for example.

The connector 150 connects the MFP 10 to another device. For example, the connector 150 is a USB interface to which a USB memory or the like is connected. Further, the connector 150 may be an interface such as HDMI (trade name), in addition to the USB interface.

The image inputter 160 reads out an image (document) and outputs the image as image data. The image inputter 160 includes a typical scanner (image input device). Further, the image inputter 160 may input image data from an external storage medium such as a USB memory, for example, or may receive image data via a network.

The image former 170 forms (prints) an image on a medium such as copy paper based on the image data. A printing scheme for the image former 170 is freely selected, and may be, for example, any of an inkjet printer, a laser printer, a thermal transfer printer, and the like. The image former 170 may be a monochrome printer or a color printer. The image former 170 may include a paper feed mechanism that supplies the medium, a transport mechanism that transports the medium, a sorter mechanism that sorts the medium after an image is formed, and the like.

### 1.3 Operation of General MFP

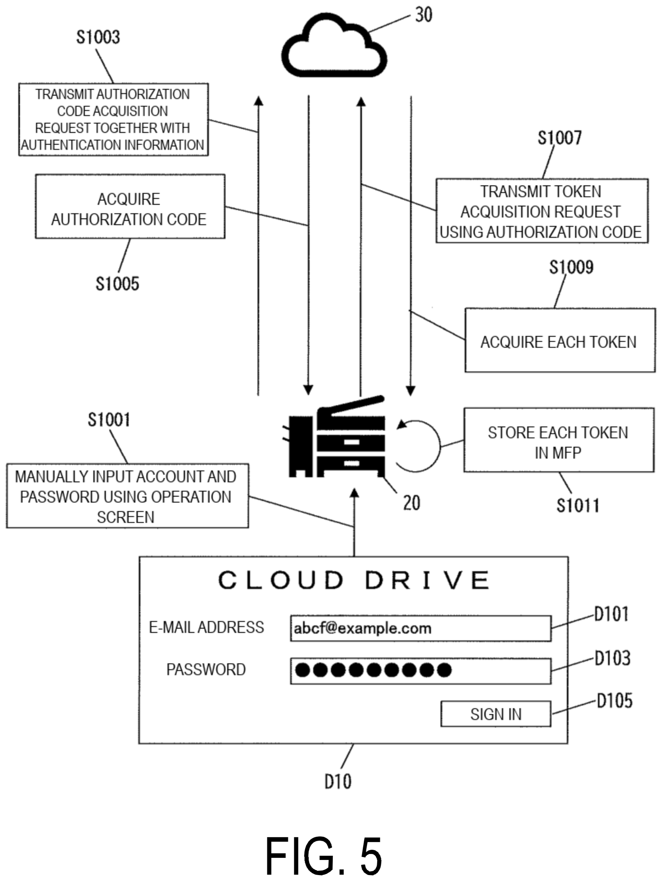

FIG. 5 is a schematic diagram for explaining an operation performed when a general MFP receives an access token and a refresh token newly issued. Before describing the operation of the MFP 10 according to the disclosure, the operation of a general MFP 20 will be described. The MFP 20 is provided instead of the MFP 10 in FIG. 1, and has the functional blocks illustrated in FIG. 2 as in the MFP 10. Hereinafter, the functional blocks of the MFP 20 are denoted by reference signs with the hundreds digit of the reference signs of the corresponding functional blocks of the MFP 10 replaced with 2. Thus, the MFP 20 includes a controller 200, a storage 210, a display 220, an operation inputter 230, a communicator 240, a connector 250, an image inputter 260, and an image former 270. The descriptions of the controller 200, the storage 210, the display 220, the operation inputter 230, the communicator 240, the connector 250, the image inputter 260, and the image former 270 are the same as the descriptions of the corresponding functional blocks in the MFP 10. However, the configuration of the controller 200 does not need to be the same as that in FIG. 3, and the configuration of the storage 210 does not need to be the same as that in FIG. 4.

The controller 200 executes a client application that uses a service that can be used after authorization by the authorization server 30. In the OAuth authentication, the client application transmits authentication information and an authorization request for resource access (use of a service) to the authorization server. In response to successful authorization, the MFP 20 acquires an approval code valid for a short period of time, from the authorization server 30.

The client application requests an access token for implementing various accesses to resources by using the authorization code acquired from the authorization server 30. The client application uses the acquired access token to implement access to a resource requested at the time of the authorization request.

The access token is valid for a relatively short period of time. When the access token expires, the client application requests the authorization server 30 to reissue (update) the token by using a refresh token valid for a relatively long period of time. In response to this, when the authentication based on the refresh token received from the client application is successful, the authorization server 30 may reissue an access token and a refresh token to the client application and invalidate the refresh token received from the client application and the corresponding access token. The disclosure is directed to such a case.

Assume that the controller 200 is displaying a screen D10 using the display 220. The screen D10 is a sign-in screen for a network service "CLOUD DRIVE". On the screen D10, the user U inputs the authentication information (for example, an e-mail address and a password) of his or her account for the network service "CLOUD DRIVE" to respective text input fields D101 and D103, and operates a sign-in button D105 by using the operation inputter 230 (S1001).

In response to this operation, the controller 200 transmits the inputted authentication information of the account and an authorization code acquisition request to the authorization server 30 via the network NW using the communicator 240 (S1003). In such a case, for the sake of security, the controller 200 preferably requests the input of the password a plurality of times. The authentication is preferably performed by a two-factor authentication method in which, in combination with a first authentication method using the account and the password, a second authentication method different from the first authentication method is used. For example, the authentication method using the account and the password may be combined with an authentication method using a device such as a smartphone or a mobile phone terminal or a physical security key such as a universal serial bus (USB) key, or a biometric authentication method using physical features such as fingerprint authentication or face authentication. The authorization server 30 authenticates the user U based on the received account, password, and the like, and generates an authorization code and transmits the authorization code to the MFP 20 when the user U is successfully authenticated (S1005). The authorization code is a code valid for a short period of time and is exchanged with the access token in the OAuth authentication.

When the communicator 240 receives the authorization code, the controller 200 transmits the received authorization code and a token acquisition request to the authorization server 30 via the network NW (S1007). The authorization server 30 that has received these determines whether the authorization succeeds based on the authorization code, and upon determining that the authorization succeeds, transmits the access token and the refresh token to the MFP 20 (S1009).

When the communicator 240 receives the access token and the refresh token, the controller 200 stores the received access token and refresh token in the storage 210 (S1011).

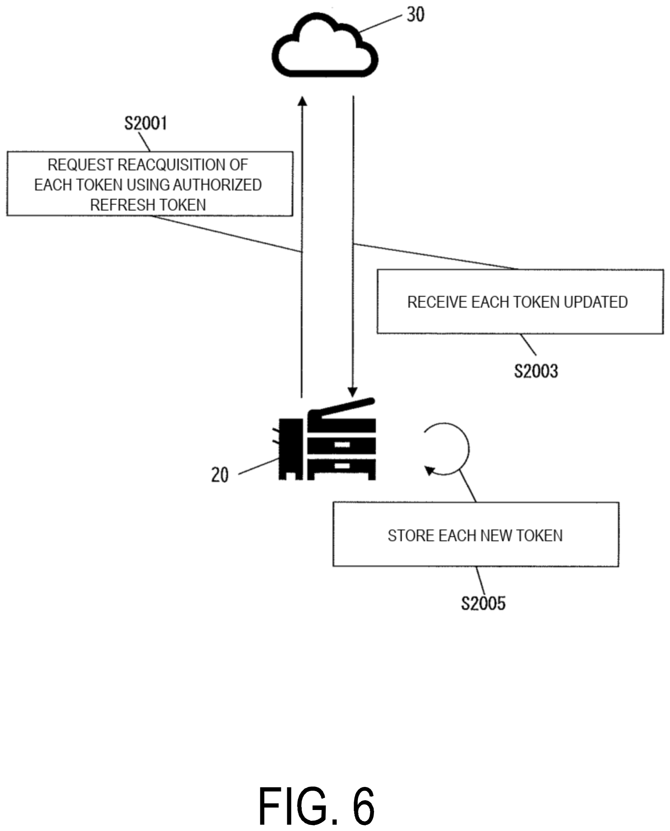

FIG. 6 is a schematic diagram for explaining an operation (token update (reacquisition) processing) performed by the general MFP 20 to request the authorization server 30 to update (reacquire) an access token and a refresh token using an authorized refresh token. After the access token expires and before the refresh token expires, the controller 200 transmits the refresh token stored in the storage 210 and a token reacquisition request to the authorization server 30 via the communicator 240 and the network NW (S2001).

The authorization server 30 performs the authentication based on the received refresh token, and transmits an updated access token and refresh token to the MFP 20 (S2003) when the authentication is successful. Here, the authorization server 30 invalidates the received refresh token. The authorization server 30 may invalidate the corresponding access token together with the received refresh token.

When the communicator 240 receives the updated access token and refresh token, the controller 200 overwrites and saves the updated access token and refresh token in the storage 210 (S2005).

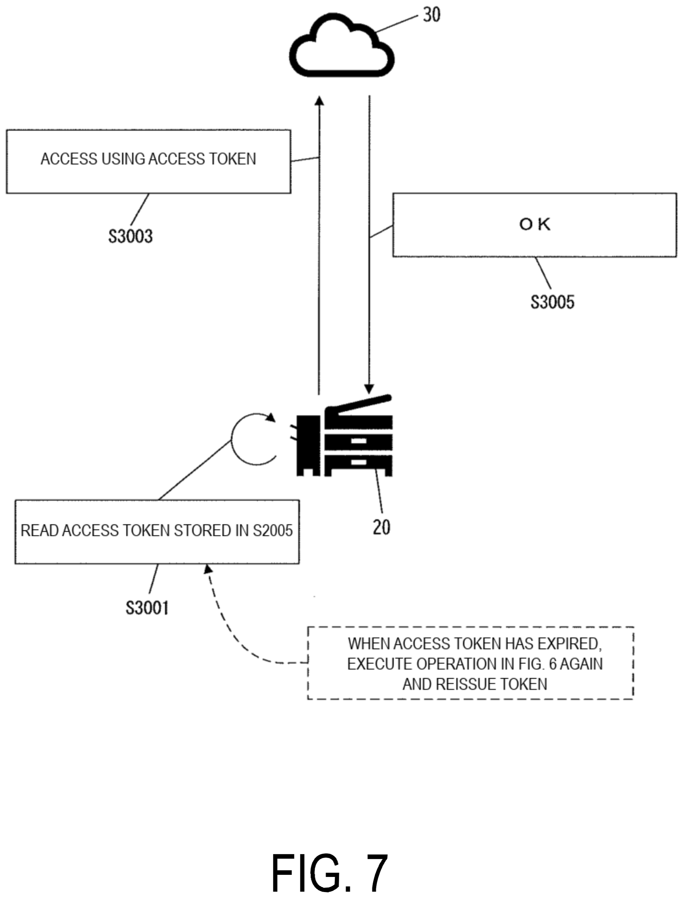

FIG. 7 is a schematic diagram for explaining processing of executing access to a resource as requested by an authorization code using an access token. Before the access token expires, the controller 200 reads the access token from the storage 210 (S3001), transmits the access token to the authorization server 30, and requests the use of the network service (S3003). In response to this, the authorization server 30 permits the use of the network service (S3005). When the access token has expired, the token update (reacquisition) processing illustrated in FIG. 6 is executed.

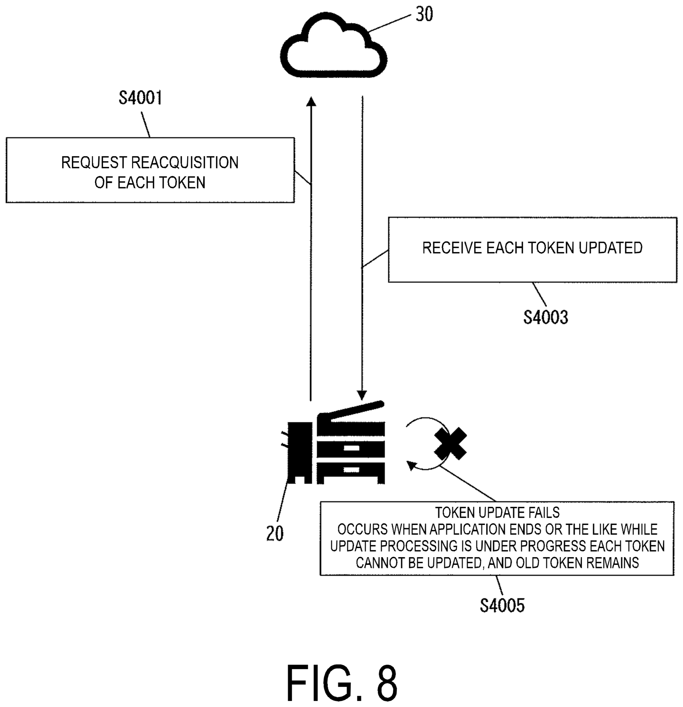

FIG. 8 is a schematic diagram for explaining an operation performed by the general MFP 20 when the token update (reacquisition) processing fails. After the access token expires and before the refresh token expires, the controller 200 transmits the refresh token stored in the storage 210 and a token reacquisition request to the authorization server 30 via the communicator 240 and the network NW (S4001).

The authorization server 30 performs the authentication based on the received refresh token, and transmits an updated access token and refresh token to the MFP 20 (S4003) when the authentication is successful. At this time, the authorization server 30 invalidates the received refresh token and the corresponding access token.

After that, the communicator 240 receives the updated access token and refresh token, and the controller 200 is supposed to execute the token update (reacquisition) processing by overwriting and saving the updated access token and refresh token in the storage 210, but the token update (reacquisition) processing may fail for some reason (S4005). For example, after S4001, the token update (reacquisition) processing may be interrupted by the transition of the MFP 20 to the energy saving mode. Furthermore, for example, after S4001, the token update (reacquisition) processing may be interrupted by an operation involving the interruption of the token update (reacquisition) processing (for example, an operation on a HOME button) by the user U. In such a case, the MFP 20 cannot overwrite and save the updated access token and refresh token in the storage 210. As a result, the storage 210 is in a state of storing the old token invalidated in the S4003.

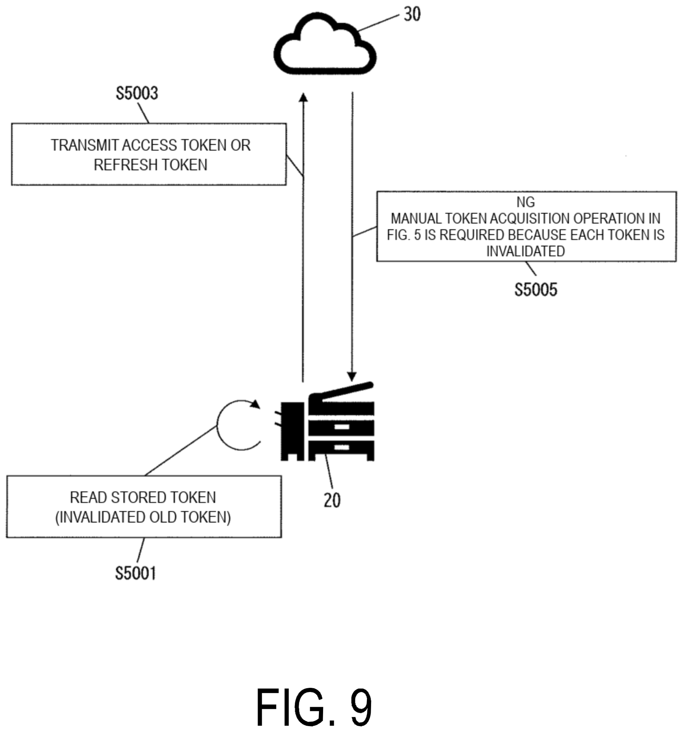

FIG. 9 is a schematic diagram for explaining an operation performed when the MFP 20 transmits a token after the token update (reacquisition) processing has failed. The controller 200 reads an access token or a refresh token from the storage 210 (S5001). The token read at this time is an old token before update. Next, the controller 200 transmits a network service use request (S3003) or a token reacquisition request (S2001) to the authorization server 30 together with the read access token or refresh token (S5003). The authorization server 30 has invalidated the access token and the refresh token in S4003, and thus the authorization server 30 rejects the request received together with the access token and the refresh token (S5005). In order for the MFP 20 to use the network service again, the operation illustrated in FIG. 5 needs to be performed. That is, the user U needs to input authentication information (for example, an e-mail address and a password) of an account for the network service via the operation inputter 230.

When the update of the access token and the refresh token fails (FIG. 8) and each of the stored tokens becomes invalid (FIG. 9), the operation in FIG. 5 needs to be performed to execute new acquisition processing for the access token and the refresh token again. At this time, the user performs authentication using the authentication information (for example, an e-mail address and a password) of an account for the network service, authentication using a security key, biometric authentication, and the like (S1001). In the disclosure, the need for the user U to perform such authentications is avoided as much as possible, whereby the operability of the user U is improved.

### 1.4 Operation of First Embodiment

Although it is preferable that the operation described below be appropriately executed by any of the configurations described in FIG. 3, for convenience of description, the following processing will be described as being executed by the controller 100.

### 1.4.1 New Token Issuance Processing

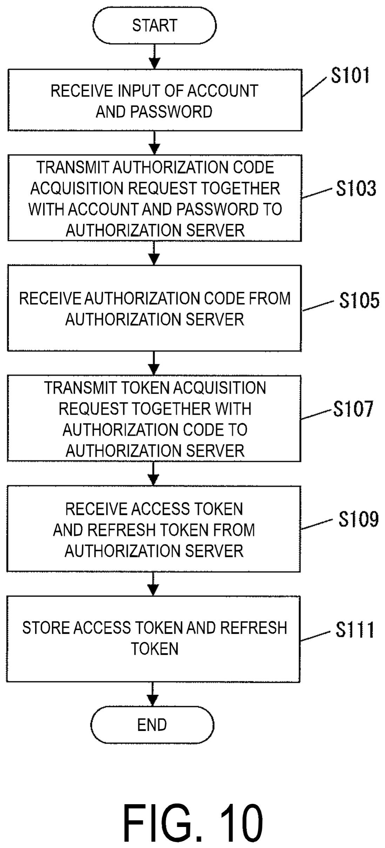

FIG. 10 is a flowchart for explaining an operation of the MFP 10 according to the first embodiment. FIG. 10 illustrates an operation for newly acquiring an access token and a refresh token for using a network service, which is basically the same as the operation illustrated in FIG. 5.

When an input of the account and the password is received via the operation inputter 130 (S101), the controller 100 transmits the input account, password, and authorization code acquisition request to the authorization server 30 via the network NW using the communicator 140 (S103). When the authentication using the received account and password is successful, the authorization server 30 transmits an authorization code to the MFP 10. When the communicator 140 receives the authorization code (S105), the controller 100 transmits the received authorization code and a token acquisition request to the authorization server 30 via the network NW using the communicator 140 (S107). When the authorization server 30 verifies the received authorization code and determines that the authorization code is valid, the authorization server 30 newly generates an access token and a refresh token and transmits the access token and the refresh token to the MFP 10. When the communicator 140 receives the access token and the refresh token (S109), the controller 100 stores the received access token and refresh token in the token storage 111 (S111).

### 1.4.2 Processing Including Token Update (Reacquisition) Processing

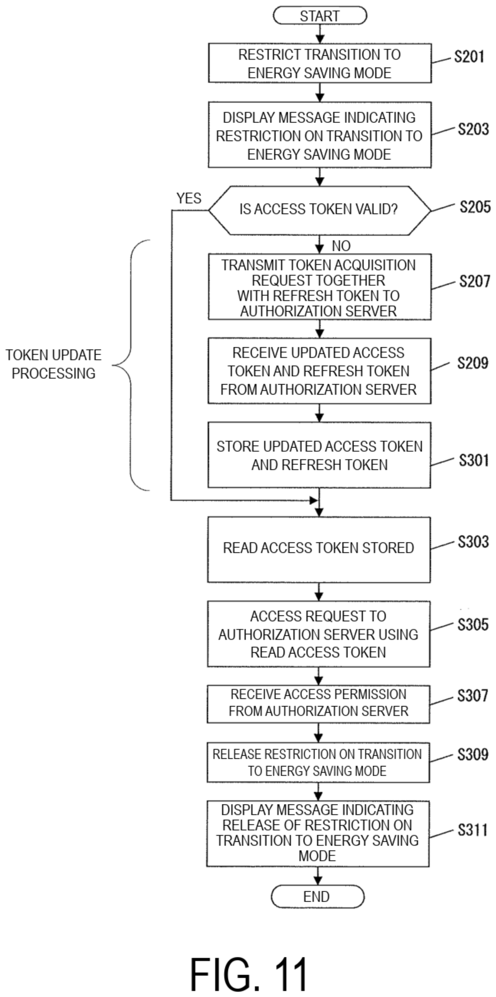

FIG. 11 is a flowchart for explaining processing including token update (reacquisition) processing of the MFP 10 according to the first embodiment. When an operation to use a network service is received via the operation inputter 130, the controller 100 restricts transition to the energy saving mode (S201). Further, the controller 100 displays a message indicating restriction on the transition to the energy saving mode, using the display 120 (S203). Next, the controller 100 determines whether the access token is currently valid based on the expiration date of the access token currently stored in the token storage 111 (S205). When the access token is invalid (No in S205), the controller 100 executes the next token update (reacquisition) processing. When the access token is valid (Yes in S205), the controller 100 proceeds to S303 described below.

In the token update (reacquisition) processing, the controller 100 transmits the refresh token stored in the token storage 111 and a token acquisition request to the authorization server 30 via the network NW using the communicator 140 (S207). The authorization server 30 executes token authentication based on the received refresh token, and when the authentication is successful, generates a new access token and refresh token and transmits the new access token and refresh token to the MFP 10 via the network NW. When the communicator 140 receives the new access token and refresh token (S209), the controller 100 updates the old access token and refresh token stored in the token storage 111 using the new access token and refresh token (S301), and proceeds to the next S303.

In the S303, the controller 100 reads the updated access token from the token storage 111 (S303), and transmits the read access token and an access request for the network service to the authorization server 30 via the network NW using the communicator 140 (S305). The authorization server 30 executes the token authentication based on the received access token, and when the authentication is successful, transmits access permission to the network service to the MFP 10 via the network NW. When the communicator 140 receives the access permission (S307), the controller 100 releases the restriction on the transition to the energy saving mode (S309), and displays a message indicating the release of the restriction on the transition to the energy saving mode, using the display 120 (S311).

### 1.5 Effects

According to the first embodiment, considering the processing of transition to the energy saving mode as a factor of the failure of the token update (reacquisition), the transition to the energy saving mode is restricted while the processing including the token update (reacquisition) processing is executed, and the restriction is explicitly released after the token update (reacquisition) processing ends. Therefore, it is possible to avoid a failure of the MFP 10 in receiving an updated access token and refresh token due to the transition of the MFP 10 to the energy saving mode during the execution of the token update (reacquisition) processing. Accordingly, input and re-input of an account and a password, preparation of a hardware key for authentication by the two-factor authentication method, execution of biometric authentication, and the like required to be performed by the user when tokens are newly issued can be minimized, and thus the operability of the user U can be improved.

### 2. Second Embodiment

Next, a second embodiment will be described. In the first embodiment, the interruption of the token update (reacquisition) processing is avoided by restricting the transition to the energy saving mode. In the second embodiment considering an operation performed by the user U via the operation inputter 130 as a factor of the failure of the token update (reacquisition), the interruption of the token update (reacquisition) processing due to the operation via the operation inputter 130 is avoided. Hereinafter, only parts of the configuration and processing different from the first embodiment will be mainly described.

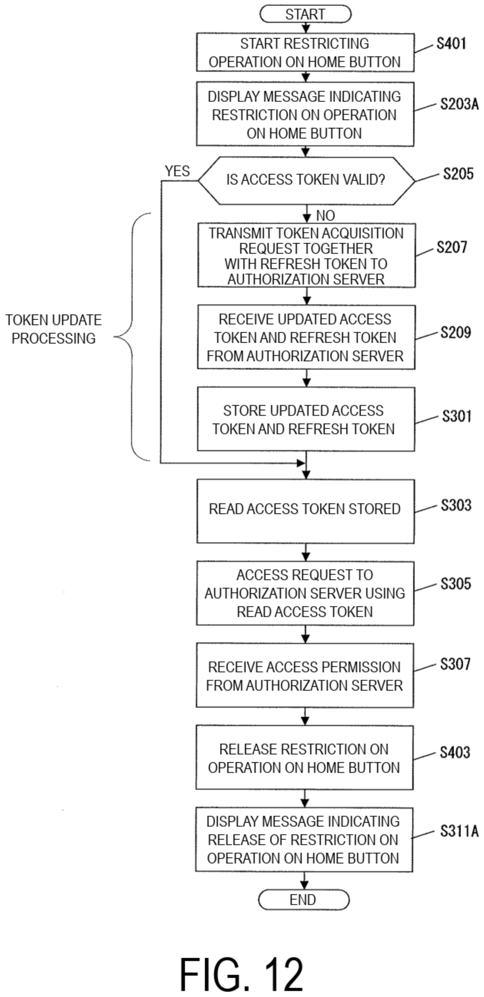

FIG. 12 is a flowchart for explaining an operation of the MFP 10 according to the second embodiment of the disclosure. When an operation to use a network service is received via the operation inputter 130, the controller 100 starts restricting an operation on the HOME button (also referred to as a home button) via the operation inputter 130 (S401).

Various screens are displayed on the display 120 according to the state of the MFP 10, and the HOME button is a button displayed on many of these screens. When the HOME button is operated via the operation inputter 130, the controller 100 forcibly changes the screen displayed on the display 120 from the currently displayed screen to a HOME screen. The HOME screen is, for example, a screen located at the highest level in a menu structure having a hierarchical structure. When the user authentication succeeds, the HOME screen is displayed, for example, after the main power of the MFP 10 is turned ON, the login screen is displayed, and the user logs in. When the user authentication fails, the HOME screen is displayed after the main power of the MFP 10 is turned ON, for example, when the HOME screen is set as an initial screen. When a predetermined button such as the HOME button or a logout button is operated, the controller 100 interrupts a function or an application being executed and transitions to another screen such as a HOME screen or a login screen. Still, in the present embodiment, the operation on the HOME button or the like is restricted from S401 to S403 described below. While the following description will be made assuming that an operation on the HOME button is restricted, an operation on another button causing forcible screen transition, such as the logout button, may also be restricted.

As a method of restricting the operation on the HOME button, for example, the controller 100 may simply ignore the operation on the HOME button. Further, for example, the controller 100 may hide the HOME button on the screen normally displayed on the display 120, so that the HOME button cannot be operated. Alternatively, the controller 100 may ignore the operation on the HOME button with the HOME button on the display 120 displayed in a display form (for example, gray-out display) different from a normal display form such that the user can visually recognize that the operation is restricted.

Next, the controller 100 displays a message indicating the restriction on the operation on the HOME button, using the display 120 (S203A). Steps S205 to S307 are the same as in the first embodiment. Upon receiving the access permission from the authorization server 30 (S307), the controller 100 releases the restriction on the operation on the HOME button (S403), and displays a message indicating the release of the restriction on the operation on the HOME button on the display 120 (S311A). The message display in the S203A, S311A may be omitted.

According to the second embodiment, the operation on the HOME button is restricted while the processing including the token update (reacquisition) processing is executed, and the restriction is explicitly released after the token update (reacquisition) processing ends. Therefore, during the execution of the token update processing, it is possible to prevent the operation on the HOME button causing interruption of the token update (reacquisition) processing. Accordingly, input and re-input of an account and a password, preparation of a hardware key for authentication by the two-factor authentication method, execution of biometric authentication, and the like required to be performed by the user when tokens are newly issued can be minimized, and thus the operability of the user U can be improved.

### 3. Third Embodiment

A third embodiment will now be described. In the second embodiment, during the execution of the processing including the token update (reacquisition) processing, the operation on a button for interrupting a function or an application being executed, such as the HOME button or the logout button (hereinafter, the operation for interrupting the function or the application being executed is referred to as an interruption operation) is restricted. Alternatively, in the third embodiment, the interruption operation is not restricted, and a message for requesting the user not to perform the interruption operation is displayed. Hereinafter, only parts of the configuration and processing different from the first embodiment or the second embodiment will be mainly described, with the operation on the HOME button described as an example of the interruption operation.

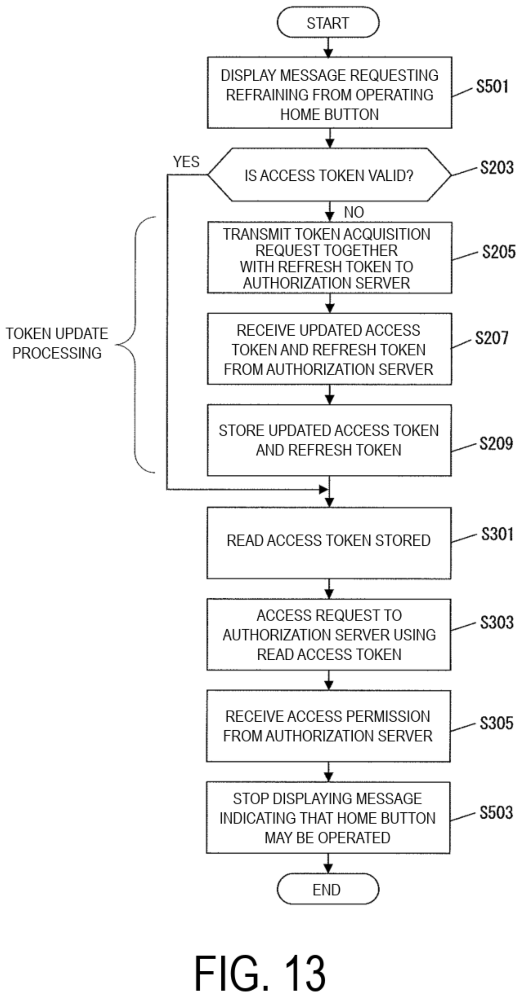

FIG. 13 is a flowchart for explaining an operation of the MFP 10 according to the third embodiment of the disclosure. When an operation to use a network service is received via the operation inputter 130, the controller 100 displays a message on the display 120 for requesting the user not to perform an operation on the HOME button (S501). This message may include information indicating that the token update (reacquisition) processing may fail when the HOME button is operated. Unlike the second embodiment, the controller 100 does not restrict the operation on the HOME button. Steps S203 to S305 are the same as in the first embodiment. When the access permission is received from the authorization server 30 (S305), the controller 100 displays a message on the display 120 to notify the user that the HOME button may be operated (S503).

In the above description, the message is displayed in the first step (S501) of the flowchart, but may be displayed at another timing. An example is given below. In the operation illustrated in the flowchart in FIG. 13, the display in the first step (S501) is omitted. Instead, the controller 100 monitors the operation via the operation inputter 130 during execution of S203 to S305. When the operation inputter 130 detects reception of the interruption operation such as an operation on the HOME button, the controller 100 displays an OK button and a cancel button on the display 120 together with the message displayed in S501 in the above description before interrupting the function or application being executed, which will be interrupted by the interruption operation. When the OK button is operated using the operation inputter 130, the controller 100 interrupts the function or application being executed. At this time, the controller 100 may display a message on the display 120 to notify that the token update (reacquisition) processing may have failed. On the other hand, when the cancel button is operated using the operation inputter 130, the controller 100 continues the operation of the flowchart in FIG. 13 while executing the function or application being executed.

According to the third embodiment, unlike the second embodiment, the user is allowed to operate the HOME button. Therefore, as compared with the second embodiment, it is possible to avoid hindering the operation of the user who wants to operate the HOME button. In addition to the operation on the HOME button, also when the user is attempting to perform the interruption operation for interrupting a function or an application being executed, it is possible to avoid hindering the operation of the user in a similar manner.

### 4. Fourth Embodiment

A fourth embodiment will now be described. The fourth embodiment is a modification of the second embodiment, and in the fourth embodiment, the controller 100 monitors the execution state of the processing including the token update (reacquisition) processing, and operates according to the monitoring result. Hereinafter, only parts of the configuration and processing different from the second embodiment will be mainly described.

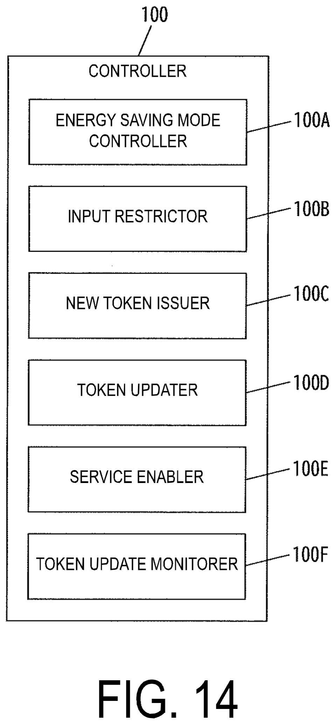

FIG. 14 is a block diagram of the controller 100 of the MFP 10 according to the fourth embodiment. The controller 100 of the fourth embodiment includes, in addition to the blocks illustrated in FIG. 3, a token update (reacquisition) monitorer 100F. The token update (reacquisition) monitorer 100F monitors execution of the processing including the token update (reacquisition) processing.

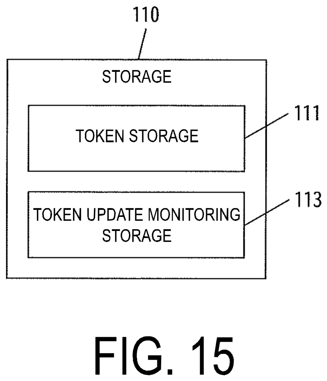

FIG. 15 is a block diagram of the storage 110 of the MFP 10 according to the fourth embodiment. The storage 110 of the fourth embodiment includes, in addition to the blocks illustrated in FIG. 4, a token update (reacquisition) monitoring storage 113. The token update (reacquisition) monitoring storage 113 stores an output from the token update (reacquisition) monitorer 100F.

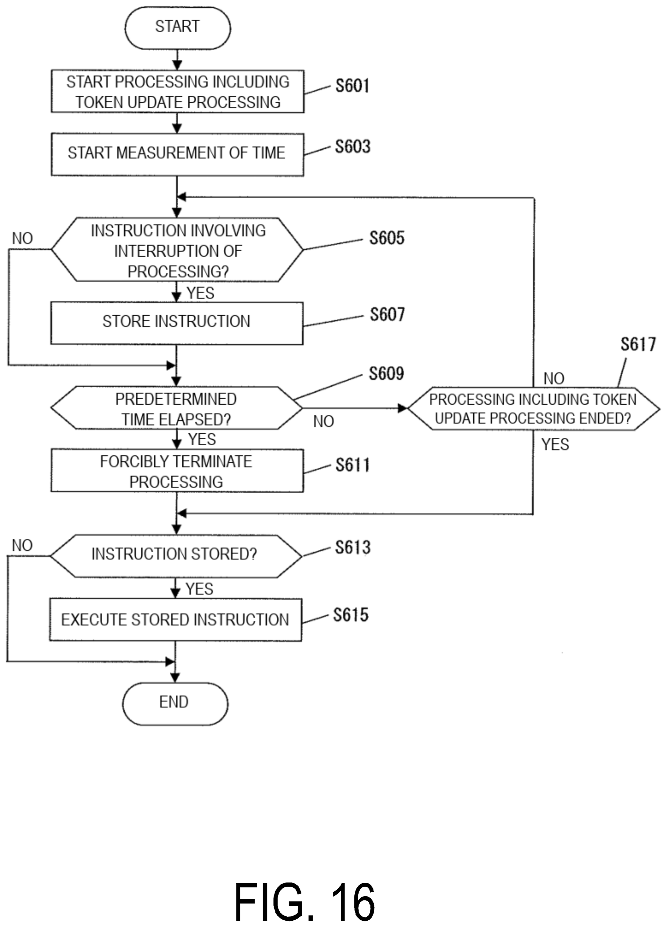

FIG. 16 is a flowchart for explaining an operation of the MFP 10 according to the fourth embodiment. In the fourth embodiment, the controller 100 executes the operation in FIG. 12 as in the second embodiment, and executes the operation in FIG. 16 in parallel with the operation in FIG. 12. When S401 in FIG. 12 starts (S601), the controller 100 starts measuring the elapsed time (S603). When the controller 100 detects that an operation (for example, an operation on the HOME button) involving interruption of the processing including the token update (reacquisition) processing is performed via the operation inputter 130 (Yes in S605), the controller 100 stores the operation in the token update (reacquisition) monitoring storage 113 (S607). When the operation involving interruption of the processing including the token update (reacquisition) processing is not detected (No in S605), the controller 100 proceeds to S609. The controller 100 compares the elapsed time with a predetermined time (S609). The predetermined time is a time determined based on a time normally required to complete the processing including the token update (reacquisition) processing, and is determined to be, for example, between 1 to 3 minutes. When the elapsed time exceeds the predetermined time (Yes in S609), the controller 100 forcibly terminates the processing including the token update (reacquisition) processing (S611). Thereafter, the controller 100 determines whether the token update (reacquisition) monitoring storage 113 stores the detection of the operation involving the interruption of the processing including the token update (reacquisition) processing (S613). When the detection is stored (Yes in S613), the controller 100 executes processing corresponding to the operation the detection thereof is stored in the token update (reacquisition) monitoring storage 113 (S615), and ends the processing. When the detection is not stored (No in S613), the processing directly ends. When the elapsed time does not exceed the predetermined time in S609 (No in S609), the controller 100 determines whether the processing including the token update (reacquisition) processing has ended. When the processing has not ended yet (No in S617), the controller 100 proceeds to S605. When the processing has ended (Yes in S617), the controller 100 proceeds to S613.

In the fourth embodiment, the controller 100 may execute the operation in FIG. 16 in parallel with the operation in FIG. 11 of the first embodiment, and in this case, when S201 in FIG. 11 starts (S601), the measurement of the elapsed time starts (S603). Instead of S605, the energy saving mode controller 100A determines whether a condition for transition to the energy saving mode is detected, and when the determination result is "Yes", the controller 100 stores the detection in the token update (reacquisition) monitoring storage 113 (S607). On the other hand, the controller 100 proceeds to S609 when the determination result is "No". The controller 100 compares the elapsed time with the predetermined time (S609), and when the elapsed time exceeds the predetermined time (Yes in S609), the controller 100 forcibly terminates the processing including the token update (reacquisition) processing (S611). Thereafter, the controller 100 determines whether the detection of the condition for transition to the energy saving mode is stored in the token update (reacquisition) monitoring storage 113. When the detection is stored, the controller 100 executes the processing of transitioning from the normal mode to the energy saving mode, and ends the processing. When the detection is not stored, the processing directly ends. When the elapsed time does not exceed the predetermined time in S609 (No in S609), the controller 100 determines whether the processing including the token update (reacquisition) processing has ended. When the processing has not ended yet (No in S617), the controller 100 returns the processing to S605. When the processing including the token update (reacquisition) processing has ended (Yes in S617), the controller 100 proceeds to determination on whether detection of the condition for transition to the energy saving mode is stored in the token update (reacquisition) monitoring storage 113.

According to the fourth embodiment, even when the operation on the HOME button or the transition to the energy saving mode is restricted during the execution of the processing including the token update (reacquisition) processing, after the predetermined time has elapsed, the processing including the token update (reacquisition) processing can be interrupted, and the restriction can be released. In addition, when the operation on the HOME button or the transition condition to the energy saving mode is detected during the execution of the processing including the token update (reacquisition) processing, the detection is stored, and the processing corresponding to the operation on the HOME button or the transition to the energy saving mode can be executed after the processing including the token update (reacquisition) processing has ended. This prevents the controller 100 from freezing when the token update (reacquisition) processing fails to be completed in a short period of time due to an unexpected situation such as a failure.

### 5. Modification Example

The disclosure is not limited to the embodiments and variations described above, and various variations are possible. In other words, the technical scope of the disclosure also includes embodiments obtained by combining technical means that are appropriately modified within the scope of the gist of the disclosure.

The programs running on each device in the embodiments are programs for controlling a CPU or the like (programs for causing a computer to function) to enable the aforementioned functions in the embodiments described above. Information handled by these devices is temporarily accumulated in a temporary storage device (for example, a RAM) during processing, and is then stored in storage devices such as various read only memories (ROM), HDDs, and solid state drives (SSD), and is read, modified, and written by a CPU as necessary.

The recording medium storing the programs may be any of a semiconductor medium (for example, a ROM or a nonvolatile memory card), an optical recording medium or a magnetooptical recording medium (for example, a digital versatile disc (DVD), a magneto optical disc (MO), a mini disc (MD), a compact disc (CD), or a Blu-ray (trade name) disc (BD)), a magnetic recording medium (for example, a magnetic tape or a flexible disk), and the like. Further, not only are the functions of the above-described embodiments enabled by executing the loaded program, but the functions of the disclosure may also be enabled by processing in cooperation with an operating system or another application program or the like, based on instructions from the program.

Further, when a program is distributed in a market, the program can be stored in a portable recording medium and distributed, or can be transferred to a server computer connected via a network such as the Internet. In this case, it is obvious that a storage device of the server computer is also included in the disclosure.

### Reference Signs List

1 Information processing system
10, 10A Multi-function printer/peripheral (MFP)
30 Authorization server
100 Controller
100A Energy saving mode controller
100B Input restrictor
100C New token issuer
100D Token updater (reacquirer)
100E Service enabler
100F Token update (reacquisition) monitorer
110 Storage
110A Read only memory (ROM)
110B Random access memory (RAM)
110C Storage section
111 Token storage
113 Token update (reacquisition) monitoring storage
120 Display
130 Operation inputter
140 Communicator
150 Connector
160 Image inputter
170 Image former

## Claims

1. An information processing apparatus (10) comprising:
one or more controllers (100); and
a communicator (140) that communicates, via a network (NW), with a server (30) that generates a token, wherein
the one or more controllers (100)
receive the token from the server (30) using the communicator (140),
execute token reacquisition processing of transmitting a token reacquisition request for requesting reacquisition of the token to the server (30) using the communicator (140) and receiving the token as a response, and
perform control to avoid interruption of processing including the token reacquisition processing during execution of the token reacquisition processing.

2. The information processing apparatus (10) according to claim 1, wherein the one or more controllers (100) restrict a predetermined operation of the information processing apparatus (10), to perform control to avoid interruption of processing including the token reacquisition processing.

3. The information processing apparatus (10) according to claim 2, wherein
the information processing apparatus (10) has an energy saving mode, and
the predetermined operation is transition to the energy saving mode.

4. The information processing apparatus (10) according to claim 2, further comprising an operation inputter (130), wherein
the predetermined operation is an operation corresponding to a predetermined operation via the operation inputter (130).

5. The information processing apparatus (10) according to claim 1, further comprising:
an operation inputter (130); and
a display (120), wherein
the one or more controllers (100) display a message requesting not to perform an operation on the operation inputter (130) on the display (120), to perform control to avoid interruption of the processing including the token reacquisition processing.

6. The information processing apparatus (10) according to claim 1, wherein the one or more controllers (100) end the control in accordance with an end of the processing including the token reacquisition processing.

7. The information processing apparatus (10) according to claim 1, wherein the one or more controllers (100) end the control in accordance with an elapsed time from a start of the token reacquisition processing.

8. The information processing apparatus (10) according to claim 1, wherein, when an instruction involving interruption of the token reacquisition processing is received during execution of the processing including the token reacquisition processing, the one or more controllers (100) execute the instruction after the processing including the token reacquisition processing ends.

9. A method of controlling an information processing apparatus (10) including a communicator (140) that communicates, via a network, with a server (30) that generates a token, the method comprising:
receiving the token from the server (30) using the communicator (140);
executing token reacquisition processing of transmitting a token reacquisition request for requesting reacquisition of the token to the server (30) using the communicator (140) and receiving the token as a response; and
performing control to avoid interruption of processing including the token reacquisition processing during a period from when the token reacquisition request is transmitted to the server (30) to when the token is received from the server (30).
